# EUROPÄISCHE PATENTSCHRIFT

(11) **EP 1 190 946 B1**
(45) Veröffentlichungstag und Bekanntmachung des Hinweises auf die Patenterteilung: **02.03.2005**
(21) Anmeldenummer: 01118532.9
(22) Anmeldetag: 01.08.2001
(51) Int. Cl.: B64D 13/06

(54) **Klimatisierungssystem für Flugzeuge**
Aircraft enviromental control system
Système de conditionnement d'air pour aéronef

(30) Priorität: 26.09.2000 DE 10047623
(43) Veröffentlichungstag der Anmeldung: 27.03.2002
(73) Patentinhaber: Liebherr-Aerospace Lindenberg GmbH, 88161 Lindenberg/Allgäu (DE)
(72) Erfinder: Sauterleute, Alfred, 88178 Heimenkirch (DE); Schlagenhaft, Engelberg, 88161 Linderberg (DE)
(74) Vertreter: Zinnecker, Armin, Dipl.-Ing.

(56) Entgegenhaltungen:
- WO-A-99/51492
- US-A- 2 856 758
- US-A- 3 207 422
- US-A- 3 696 637
- US-A- 3 877 246
- US-A- 4 445 342
- US-A- 5 699 983
- US-A- 6 070 418

## Beschreibung

Die Erfindung betrifft ein Klimatisierungssystem für Flugzeuge zum Aufbereiten von Feuchtigkeit enthaltender, unter Überdruck stehender Luft zur Klimatisierung einer Flugzeugkabine.

Die Frischluft zur Klimatisierung von Flugzeugkabinen wird aus der dem Triebwerk mit hohem Druck und hoher Temperatur abgezapften Luft, der sogenannten Zapfluft aufbereitet. Die Klimatisierungssysteme nutzen das Druck- und Temperaturpotential der Triebwerksluft zur Erzeugung der dazu erforderlichen Kühlleistung. Die Zapfluft wird im Laufe des Frischluftaufbereitungsprozesses abgekühlt, entfeuchtet und auf den Kabinendruck von ca. 1 bar im Bodenbetrieb bzw. ca. 0,8 bar im Flugbetrieb entspannt. Besonderer Wert wird bei der Frischluftaufbereitung auf die Luftentfeuchtung gelegt, um eine Vereisung einzelner Bauteile des Klimatisierungssystems und insbesondere eine Eiskristallbildung und Nebelbildung in der aufzubereitenden Frischluft zu verhindern. Die Notwendigkeit der Entfeuchtung besteht allerdings hauptsächlich im Bodenbereich, weil im Flugbetrieb, das heißt in großen Höhen, die Umgebungsluft und damit die abgezapfte Triebswerksluft ohnehin extrem trocken ist.

In der nicht vorveröffentlichten deutschen Patentanmeldung DE 100 36 443.8 wurde ein Klimatisierungssystem für Flugzeuge zum Aufbereiten von Feuchtigkeit enthaltender, unter Überdruck stehender Luft zur Klimatisierung einer Flugzeugkabine vorgeschlagen, die mindestens einen Verdichter zum Verdichten der unter Überdruck zugeführten Luft auf einen noch höheren Druck, eine erste Entspannungsturbine zum Entspannen der Luft auf einen niedrigeren Druck, eine zweite dieser ersten nachgeschalteten Entspannungsturbine zum weiteren Entpannen der Luft und eine zwischen der ersten Entspannungsturbine und der zweiten Entspannungsturbine angeordnete Wasserabscheideeinrichtung aufwies. Mit diesem Klimatisierungssystem kann die Luft weitgehend entfeuchtet werden. Allerdings ist in diesem wie auch in anderen vorbekannten Klimatisierungssystemen eine Regelung des Feuchtegehalts der zur Klimatisierung der Flugzeugkabine zur Verfügung gestellten Luft noch nicht vorgesehen.

Aus der WO 99/51492 A1 ist ein Klimatisierungssystem für Flugzeuge zum Aufbereiten von Feuchtigkeit enthaltender, unter Überdruck stehender Luft zur Klimatisierung einer Flugzeugkabine bekannt. Diese weist einen Verdichter zum Verdichten der bereits unter Überdruck zugeführten Luft auf einen noch höheren Druck, eine erste Entspannungsturbine zum Entspannen der Luft auf einen niedrigeren Druck, eine zweite dieser ersten nachgestalteten Entspannungsturbine zum weiteren Entspannen der Luft und eine zwischen der ersten Entspannungsturbine und der zweiten Entspannungsturbine angeordneten Wasserabscheideeinrichtung auf.

Aus der US 2 856 758 A ist ein Klimatisierungssystem für Flugzeuge mit einem Verdichter, einem Wärmetauscher und einer Turbine bekannt, bei welchem nach dem Kühlen und Entspannen in der Turbine die Luft in einen Entfeuchter eintritt, bevor sie weiter in die Kabine geleitet wird. Die hier eingesetzte Turbine weist einen variablen Düsenquerschnitt zur Regelung des Entspannungsgrads und somit der Temperatur der entspannten Luft auf, ohne dass hiermit eine Reduzierung der Kühlleistung einhergeht.

Aus der US 6 070 418 ist eine Flugzeugklimaanlage bekannt, in der zwei Entspannungsturbinen unter Zwischenschaltung eines Wasserabscheiders hintereinander geschaltet sind.

Aufgabe der vorherigen Erfindung ist es daher, ein gattungsgemäßes Klimatisierungssystem derart weiterzubilden, daß sie gleichzeitig eine Feuchtigkeitsregelung für die zur Klimatisierung der Flugzeugkabine zur Verfügung zu stellenden Luft ohne Einbußen in der Kühlleistung ermöglichen.

Erfindungsgemäß wird diese Aufgabe durch die Kombination der Merkmale des Anspruchs 1 gelöst. Bei dem erfindungsgemäßen Klimatisierungssystem ist die der Entwässerung dienende Baueinheit nach der ersten Entspannungsturbine eingebaut. So wird die aus dem Hauptwärmetauscher kommende hoch gespannte aber noch feuchte Luft bei ca. 45 °C auf die erste Entspannungsturbine gegeben. Aus der Entspannungsturbine wird die in einer ersten Stufe entspannte immer noch feuchte Luft, in der aufgrund der Temperaturabsenkung die Feuchtigkeit in sehr feine Tröpfchen auskondensiert ist, in die Wasserabscheideeinrichtung, die beispielsweise aus einer Tropfenkoalisziervorrichtung und einem anschließenden Wasserabscheider bestehen kann, eingeleitet. Die vorliegende Erfindung macht sich nun zunutze, daß der Grad der auskondensierten Tröpfchen von dem Temperaturniveau abhängt, auf welches die in die Turbine eingeleitete hoch gespannte aber noch feuchte Luft abgesenkt wird. Je höher der Entspannungsgrad der Luft ist, desto niedriger stellt sich das Temperaturniveau der Luft ein. Bei abnehmendem Temperaturniveau steigt der Anteil an auskondensiertem freien Wasser. Durch gezieltes Einstellen des Entspannungsgrades der Luft kann also die Restfeuchte der Luft eingestellt werden. Die Kombination der Merkmale des Anspruchs 1 ermöglicht demnach eine Feuchtigkeitsregelung der zur Klimatisierung der Flugzeugkabine zur Verfügung gestellten Luft.

Besonders vorteilhafte Ausgestaltungen der Erfindung ergeben sich aus den sich an den Hauptanspruch anschließenden Unteransprüchen. Vorzugsweise weist die erste Entspannungsturbine einstellbare Düsenquerschnitte auf. Über die Einstellungen der Düsenquerschnitte kann in einfacher Weise der in der Entspannungsturbine erzielbare Entspannungsgrad eingestellt werden. Je kleiner der Düsenquerschnitt eingestellt ist, desto höher ist der mit der Entspannungsturbine erzielbare Entspannungsgrad. Der Düsenquerschnitt kann über entsprechend ansteuerbare Schieber veränderbar sein.

Gemäß einer anderen allerdings aufwendigeren Alternative kann der Entspannungsgrad auch über das Verstellen von Leitschaufeln in der Entspannungsturbine verändert werden.

Gemäß einer einfachen Ausführungsvariante weist die erste Entspannungsturbine eine Zweifachdüse auf, wobei jeder Teil der Zweifachdüse eine separate Zuleitung aufweist und wobei eine dieser Zuleitungen absperrbar ist.

Gemäß einer weiteren alternativen Ausführungsvariante kann die erste Entspannungsturbine auch einen Bypass aufweisen, der gegebenenfalls über einen Schieber zu- und aufgesteuert werden kann. Über den Bypass kann ein Teil der hoch gespannten Luft unter Umgehung der Turbine unmittelbar in die Wasserabscheideeinrichtung geleitet werden, wobei hier nur ein sehr geringer Anteil an freiem Wasser entzogen werden kann.

Gemäß einer weiteren verbesserten Ausführungsvariante kann die zweite Entspannungsturbine ebenfalls einstellbare Düsenquerschnitte aufweisen. Soweit die Entspannungsturbinen auf unterschiedlichen Wellen angeordnet sind, werden die Düsenquerschnitte wahlweise unabhängig voneinander eingestellt. Besonders vorteilhaft kann aber für den Fall, daß die zwei Turbinen nebeneinanderliegend auf einer Welle angeordnet sind, eine kombinierte Düsenquerschnittseinstellung erfolgen.

Eine weitere Ausgestaltung der Erfindung sieht eine Verbindungsleitung zwischen dem Ausgang oder Eingang des zweiten Verdichters und dem Ausgang der ersten Entspannungsturbine vor. In dieser Verbindungsleitung ist ein Regelventil angeordnet, über das je nach Bedarf zumindest ein Teil des Luftstroms vom Verdichter unmittelbar hinter der Entspannungsturbine wieder aufgegeben werden kann. Hierdurch kann vergleichsweise feuchte Luft unter Umgehung der ersten Entspannungsturbine erzeugt werden und gegebenenfalls die Turbine vor Vereisung geschützt werden.

Zur gezielten aktiven Befeuchtung der für die Klimatisierung der Flugzeugkabine vorgesehenen Luft kann eine Befeuchtungseinrichtung vorgesehen werden, die unmittelbar die Zapfluft vor Eintritt in den Primärwärmetauscher auf ein gewünschtes Feuchteniveau anhebt.

Somit kann mit dem Klimatisierungssystem nach der vorliegenden Erfindung der Feuchtegehalt in der für die Klimatisierung der Flugzeugkabine vorgesehenen Luft in einem weiten Bereich eingestellt werden.

Weitere Einzelheiten und Vorteile der Erfindung werden anhand eines in der Zeichnung dargestellten Ausführungsbeispieles näher erläutert.

Es zeigen:
- Figur 1:: eine schematische Darstellung einer ersten Ausführungsvariante des erfindungsgemäßen Klimatisierungssystems,
- Figur 2:: eine schematische Darstellung einer zweiten Ausführungsvariante der vorliegenden Erfindung,
- Figur 3:: eine schematische Darstellung einer dritten Ausführungsvariante der vorliegenden Erfindung,
- Figur 4:: eine schematische Darstellung einer vierten Ausführungsvariante der vorliegenden Erfindung,
- Figur 5:: eine schematische Darstellung einer ersten Ausführungsvariante einer Entspannungsturbine mit einstellbarem Düsenquerschnitt,
- Figur 6:: eine schematische Schnittdarstellung einer zweiten Ausführungsvariante einer Entspannungsturbine mit einstellbarem Düsenquerschnitt und zuschaltbarem Bypass,
- Figur 7:: eine schematische Darstellung einer dritten Ausführungsvariante einer Entspannungsturbine mit einer Zweifachdüse und
- Figur 8:: eine schematische Darstellung einer vierten Ausführungsvariante einer Entspannungsturbine, wobei hier zwei nebeneinander auf einer Welle angeordnete Entspannungsturbinen einen gekoppelt einstellbaren Düsenquerschnitt aufweisen.

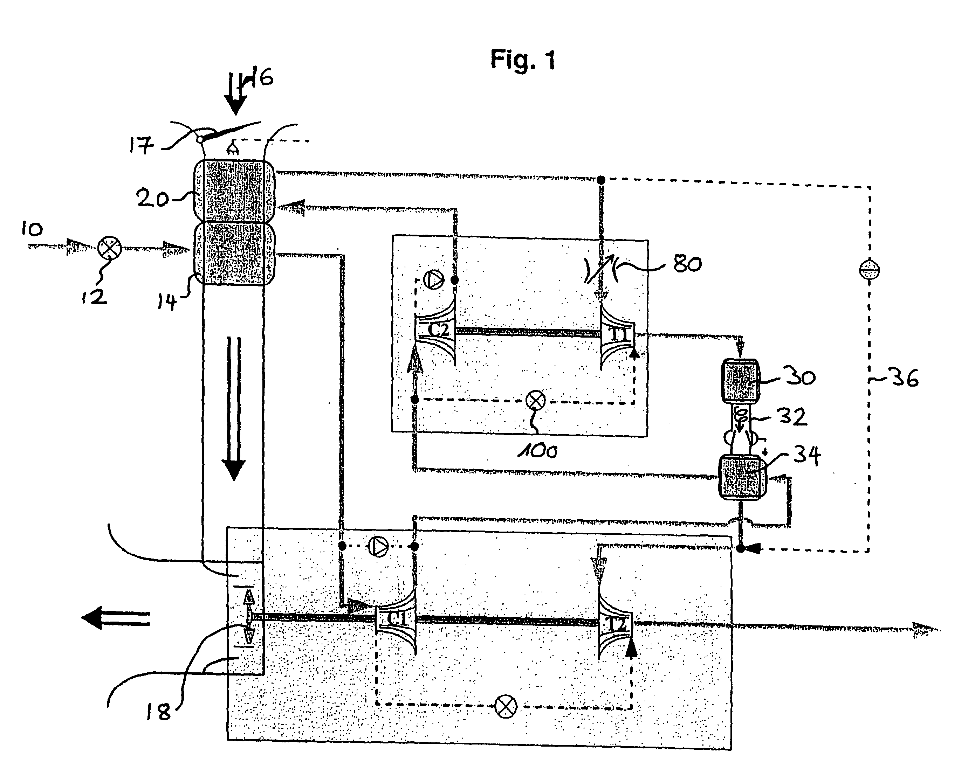

Figur 1 zeigt ein Klimatisierungssystem, das von seinem grundsätzlichen Aufbau demjenigen gemäß der DE 100 36 443.8 entspricht.

Über ein Durchsatzregelventil 12 wird diejenige Menge Zapfluft 10 aus einem Triebwerk mit etwa 2 bar und 200 °C abgezapft, die zur Frischluftversorgung für die Kabine benötigt wird. Im Bodenbetrieb wird die Zapfluft einem Hilfstriebwerk mit etwa 3 bar entzogen. Die Zapfluft wird zunächst über einen Primärwärmetauscher 14 geleitet und auf ca. 80 °C abgekühlt. Bei dem Wärmetauscher handelt es sich um einen Luft-Luft-Wärmetauscher, wobei als Kühlmedium Umgebungsluft 16 verwendet wird. Der Volumenstrom der Kühlluft 16 wird im Bodenbetrieb über einen Ventilator 18 eingestellt. Im Flugbetrieb reicht die zugeführte Stauluft als Kühlmedium aus, wobei über eine Drosselklappe 17 der Volumenstrom einstellbar ist. Die auf ca. 80 °C abgekühlte Zapfluft wird in einem ersten Verdichter C1 und ausgehend von diesem in einem zweiten Verdichter C2 weiter verdichtet auf ca. 5 bar. Diese aus dem zweiten Verdichter kommende gespannte Luft wird in einem Hauptwärmetauscher 20, gleichfalls einem Luft-Luft-Wärmetauscher, mittels Umgebungsluft 16 auf ca. 45 °C abgekühlt. Der Verdichter C1 der ersten Verdichterstufe bildet zusammen mit einer Entspannungsturbine T2 und dem Ventilator 18 eine Dreiradmaschine ACM.

Das bedeutet, daß der Verdichter C1 und der Ventilator 18 durch die in der Entspannungsturbine T2 gewonnene Energie regenerativ angetrieben werden. Der zweite Verdichter C2 ist mit einer Entspannungsturbine T1 gekoppelt, wobei er durch die in der Entspannungsturbine T2 gewonnene Energie ebenfalls regenerativ angetrieben wird. Somit handelt es sich bei dem in der Figur 1 dargestellten Klimatisierungssystem um eine 2+3-Rad-Maschine. Die Erfindung ist selbstverständlich nicht auf die hier dargestellte 2+3-Rad-Maschine beschränkt. Sie kann beispielsweise auch auf einer 2+2-Rad-Maschine ausgeführt werden, bei der nur ein Verdichter vorhanden ist oder bei einer 4-Rad-Maschine, bei der auf einer Welle zwei Entspannungsturbinen angeordnet sind.

Die aus dem Hauptwärmetauscher 20 kommende hoch gespannte Luft wird auf die erste Entspannungsturbine T1 gegeben. Aufgrund der Entspannung sinken Druck und Temperatur. Hierdurch kondensiert Wasser aus. Die aus der ersten Turbine T1 austretende Luft weist das Wasser in einem sehr fein verteilten Nebel auf. Diese Luft wird in eine Wasserabscheidevorrichtung geleitet, die im hier dargestellten Ausführungsbeispiel aus einer Tropfenkoalisziervorrichtung 30 und einem sich anschließenden Wasserabscheider 32 besteht. Die Tropfenkoalisziervorrichtung 30 besteht im hier dargestellten Ausführungsbeispiel aus einer Luft-Luft-Wärmetauscherpackung. An den Blechen der Wärmetauscherpackung koaliszieren die feinen Tröpfchen zu größeren Tropfen, die durch die Strömung mitgerissen werden. Sie werden im nachgeschalteten Wasserabscheider 32 abgeschieden. Die aus dem Wasserabscheider austretende Luft wird in einen Wärmetauscher 34 geleitet, wo sie um wenige Kelvin erwärmt wird, so daß das freie Wasser in die Gasphase übergeht. Die somit vollständig von freiem Wasser befreite Luft wird vom Wärmetauscher 34 auf eine zweite Entspannungsturbine T2 geleitet, wo sie dann bis auf den gewünschten Umgebungsdruck, wie er in der Flugzeugkabine herrscht, abgesenkt wird.

Im Wämetauscher 34 wird die aus dem Wasserabscheider 32 stammende Luft dadurch erwärmt, daß im Kreuzstrom zu dieser die aus dem Verdichter C1 auströmende Luft, die zum Verdichter C2 weitergeführt wird, geleitet wird. Mit 36 ist in Figur 1 eine Bypass-Einrichtung bezeichnet, mittels derer die aus dem Wärmetauscher 20 kommende hoch gespannte Luft unmittelbar auf die zweite Entspannungsturbine T2 gegeben werden kann. Bei dieser Bypass-Einrichtung kann der Wasserabscheidekreislauf umgangen werden. Dies empfiehlt sich dann, falls die Umgebungsluft des Flugzeuges sehr trocken ist, wie dies beispielsweise während des Flugbetriebes der Fall ist. In diesem Fall wird das Klimatisierungssystem als Dreiradsystem betrieben.

Die Feuchtigkeitsregelung der zu konditionierenden Luft erfolgt im Ausführungsbeispiel gemäß der Figur 1 zunächst dadurch, daß die Entspannungsturbine eine Einlaufdüse 80 aufweist, deren Einlaufquerschnitt verstellbar ist. Durch Verstellung des Einlaufquerschnittes kann der Entspannungsgrad der Luft verändert werden, so daß diese auf ein vorher bestimmbares Temperaturniveau am Ende der ersten Entspannungsturbine T1 einstellbar ist. Je niedriger das Temperaturniveau eingestellt wird, desto mehr freies Wasser entsteht, das anschließend in der Wasserabscheideeinrichtung 30, 32 abgetrennt werden kann. Demgemäß wird also mit einer Absenkung des Temperaturniveaus eine vergleichsweise trockenere Luft zur Klimatisierung der Flugzeugkabine erzeugt.

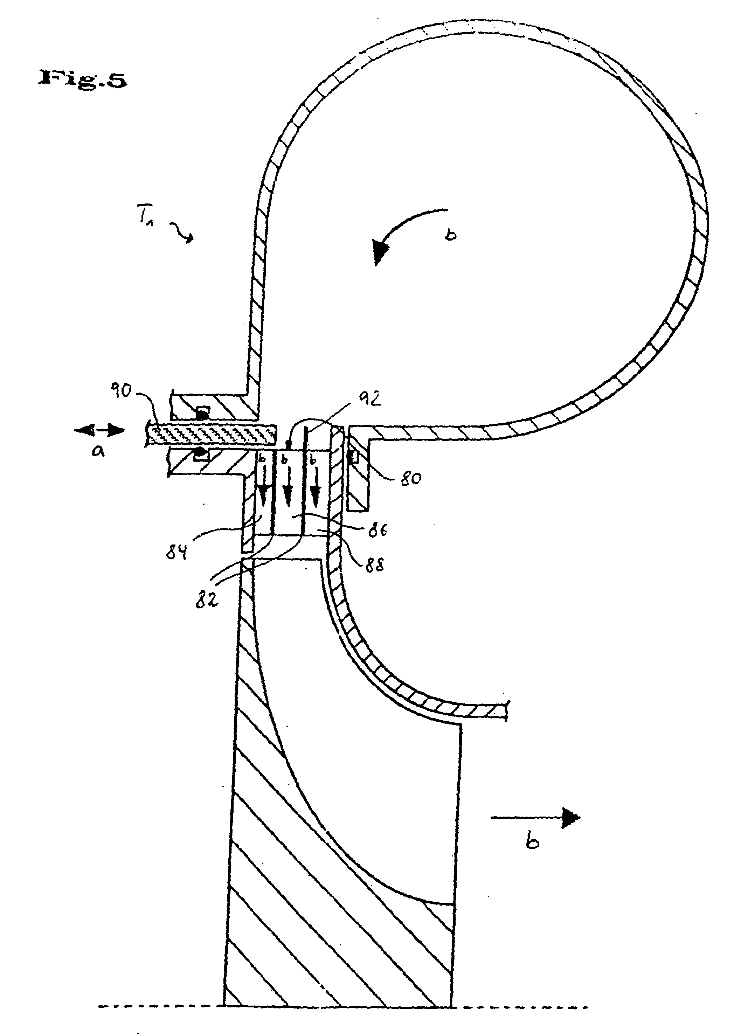

In Figur 5 ist schematisch ein Teil einer Entspannungsturbine T1 mit einem verstellbaren Einlaufquerschnitt 80 gezeigt, wobei über den Querschnitt durch mehrere Wandungen 82 voneinander getrennt Einlaufkanäle 84, 86 und 88 definiert sind. Die Kanäle sind zumindest teilweise über einen Schieber 90 verschließbar. Im hier dargestellten Ausführungsbeipiel kann der Schieber 90 bis zu einem Anschlag 92 verschoben werden, wodurch er die Kanäle 84 und 86 verschließt, während der Kanal 88 geöffnet bleibt. Beim Schließen des Schiebers 90 ist also der kleinste mögliche Querschnitt der Düse verwirklicht. Hierdurch wird der höchst mögliche Entspannungsgrad bei dem hier dargestellten Ausführungsbeispiel für die erste Entspannungsturbine T1 erzielt. Die Doppelpfeilrichtung a zeigt die Richtung für die Verschieblichkeit des Schiebers 90 an. Die einfachen Pfeile b zeigen die Strömungsrichtung der Luft.

In Figur 1 ist mit 100 eine Ventileinrichtung bezeichnet, die es ermöglicht, einen beliebigen Anteil der aus dem Einlaß des zweiten Verdichters C2 abgezweigten Luft unmittelbar hinter der ersten Entspannungsturbine T1 einzuspeisen. Hierdurch wird vergleichsweise heiße Luft im gespannten Zustand unmittelbar der Wasserabscheideeinrichtung 30, 32 zugeführt. Aufgrund des hohen Temperaturniveaus wird vergleichsweise wenig freies Wasser entstehen, so daß hier eine Luft mit hoher Luftfeuchtigkeit für die Klimatisierung der Flugzeugkabine zur Verfügung gestellt wird. Die Ventileinrichtung 100 dient gleichfalls zur Enteisung.

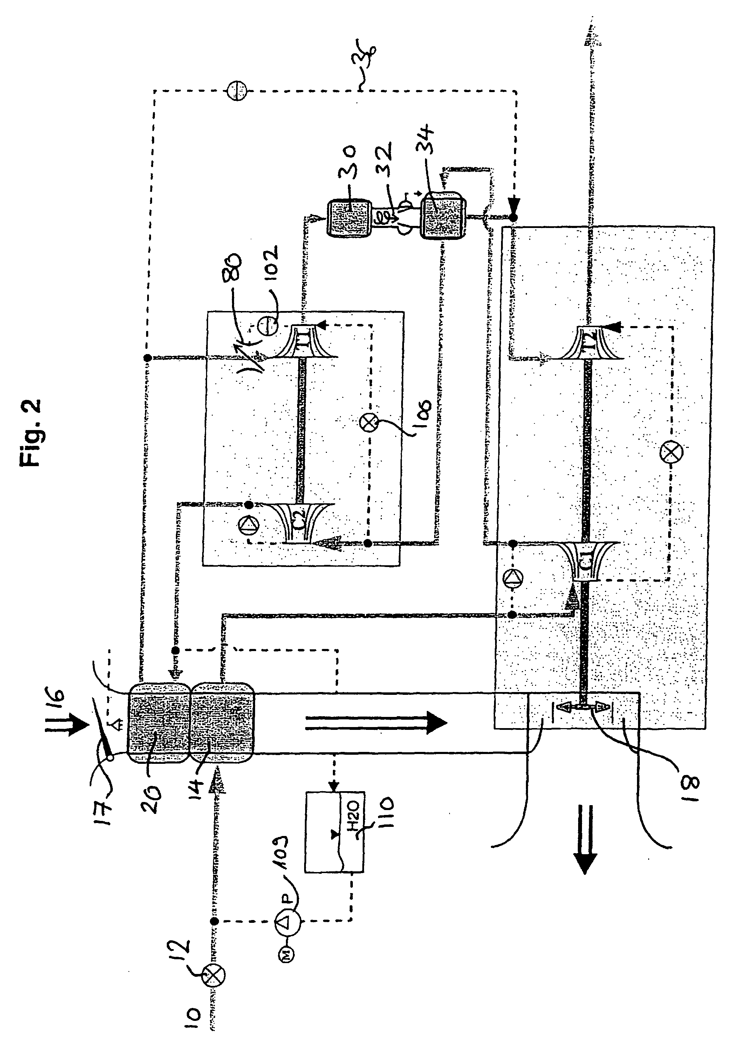

In Figur 2 ist eine weitere Ausführungsform der Erfindung dargestellt. Gleiche Teile sind mit gleichen Bezugszeichen versehen. In dieser Ausführungsvariante ist vor dem Primärwärmetauscher 14 eine Befeuchtungseinrichtung 110 angeordnet, mit der die Zapfluft 10 aktiv befeuchtet werden kann. In die Befeuchtungseinrichtung 110 wird Luft eingeführt, die aus dem verdichteten Luftstrom, der aus dem Verdichter C2 ausströmt, abgezweigt ist. Wasser oder mit Wassertröpfchen beladene Luft wird über eine Pumpe 109, wie in Figur 2 dargestellt, in die Zapfluft 10 eingespritzt.

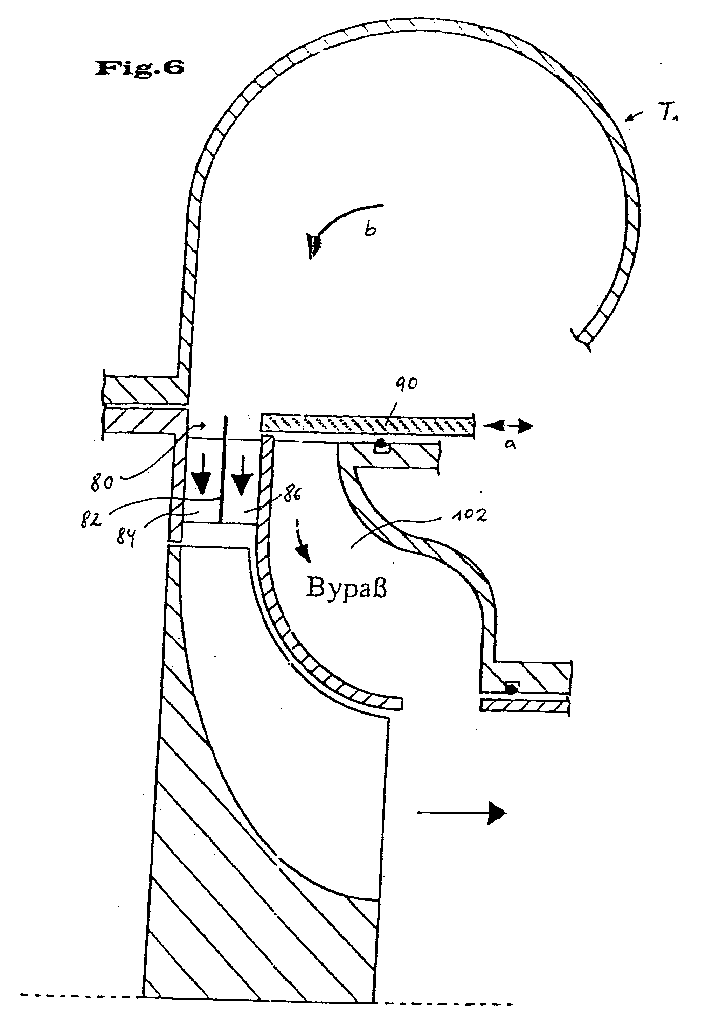

Weiterhin ist hier als Entspannungsturbine T1 eine Entspannungsturbine entsprechend der Figur 6 eingesetzt. Diese weist neben einem einstellbaren Düsenquerschnitt 80, der im vorliegenden Fall nur zwei Kanäle 84 und 86 umfaßt, die durch eine Trennwand 82 voneinander getrennt sind, zusätzlich einen Bypass 102 auf. Über einen in Doppelpfeilrichtung a verschieblichen Schieber 90 kann zum einen der Düsenquerschnitt 80 durch Abdecken des Kanals 86 verändert werden und andererseits zusätzlich der Bypass 102 aufgesteuert werden, der, wie in Figur 2 schematisch dargestellt, die Luft an der ersten Entspannungsturbine T1 vorbeiführt. Die über den Bypass geführte Luft 102 wird somit nicht in der Entspannungsturbine T1 entspannt und verbleibt damit auch auf dem Turbineneingangstemperaturniveau. Je nach Stellung des Schiebers 90 wird sich also ein unterschiedliches Temperatumiveau und damit ein unterschiedlicher Feuchtegrad der aus der Turbine austretenden Luft einstellen.

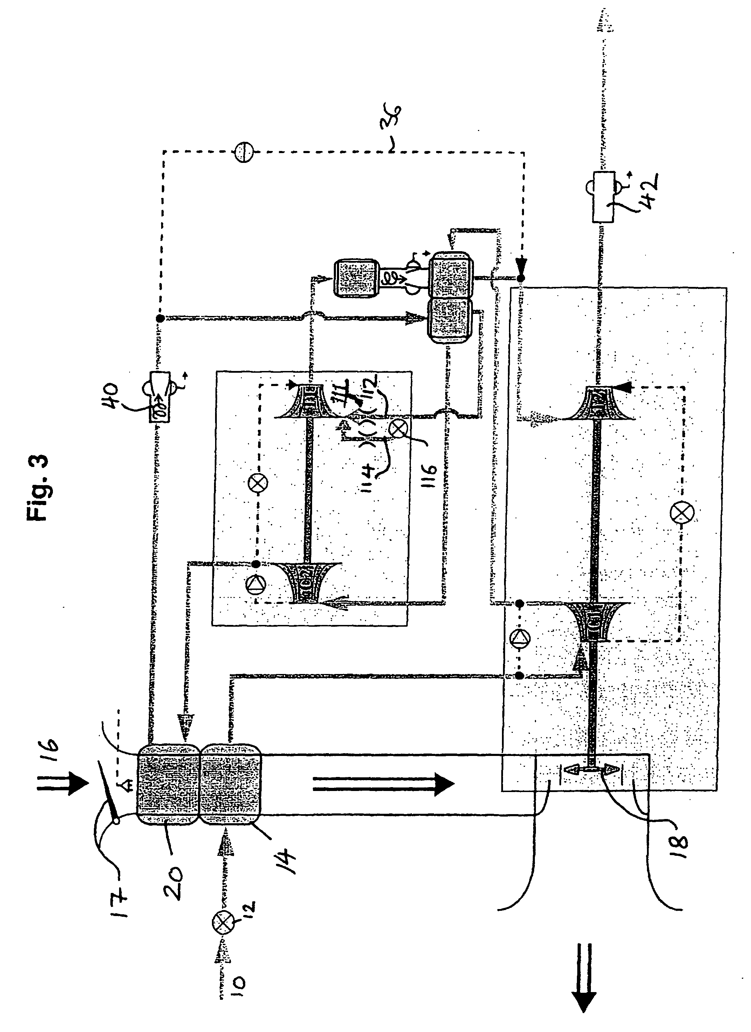

Die Ausführungsvariante gemäß Figur 3 entspricht im Wesentlichen derjenigen gemäß Figur 1. Hier sind ebenfalls gleiche Teile wieder mit gleichen Bezugsziffern versehen. Allerdings ist der dem Wasserabscheider 32 nachgeschaltete Wärmetauscher zweiteilig aufgebaut. Zum einen handelt es sich um einen der vorherigen Ausführungsvariante baugleichen Wärmetauscher 34, in welchem die aus der Entspannungsturbine T1 austretende Luft gegenüber der aus dem Verdichter C1 austretenden Luft im Kreuzstrom geführt wird. Diesem Wärmetauscher nachgeschaltet - oder auch parallelgeschaltet - ist aber ein zweiter baugleicher Wärmetauscher, in welchem die aus der ersten Wärmetauscherhälfte 34 stammende Luft, die aus dem Verdichter C1 stammt, im Verhältnis zu der hoch gespannten Luft aus dem Hauptwärmetauscher 20 ebenfalls im Kreuzstrom geführt wird. In der hier dargestellten Ausführungsform sind zusätzlich 2 Wasserabscheider 40 und 42 vorgesehen, wobei der Wasserabscheider 40 zur Abscheidung von freiem Wasser in der aus dem Hauptwärmetauscher 20 strömenden hoch gespannten Luft dient. Der Wasserabscheider 42 ist der zweiten Entspannungsturbine T2 nachgeschaltet. Dieser Wasserabscheider 42 ist bevorzugt ohne Dralleinrichtung ausgeführt, um die Vereisungsgefahr zu minimieren.

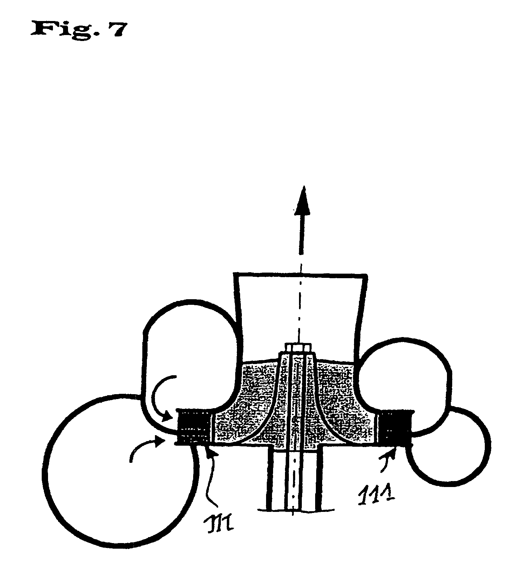

Die aus dem Hauptwärmetauscher 20 kommende Luft wird im hier dargestellten Ausführungsbeispiel auf eine Entspannungsturbine mit Zweifachdüse 111 gegeben, wie sie beispielhaft in Figur 7 dargestellt ist. Hier ist jeder Düse eine separate Zuleitung 112 bzw. 114 zugeordnet. Über ein Ventil 116 kann die Zuleitung 114 geschlossen werden, so daß die gesamte Luft nur über eine Teildüse der Zweifachdüse 111 geführt wird, wodurch ein höherer Entspannungsgrad und damit eine niedrigere Temperatur der Entspannungsturbine T1 erreicht wird.

Die hier vorgestellte Ausführungsvariante beinhaltet also eine Zweistufenregelung der Luftfeuchtigkeit.

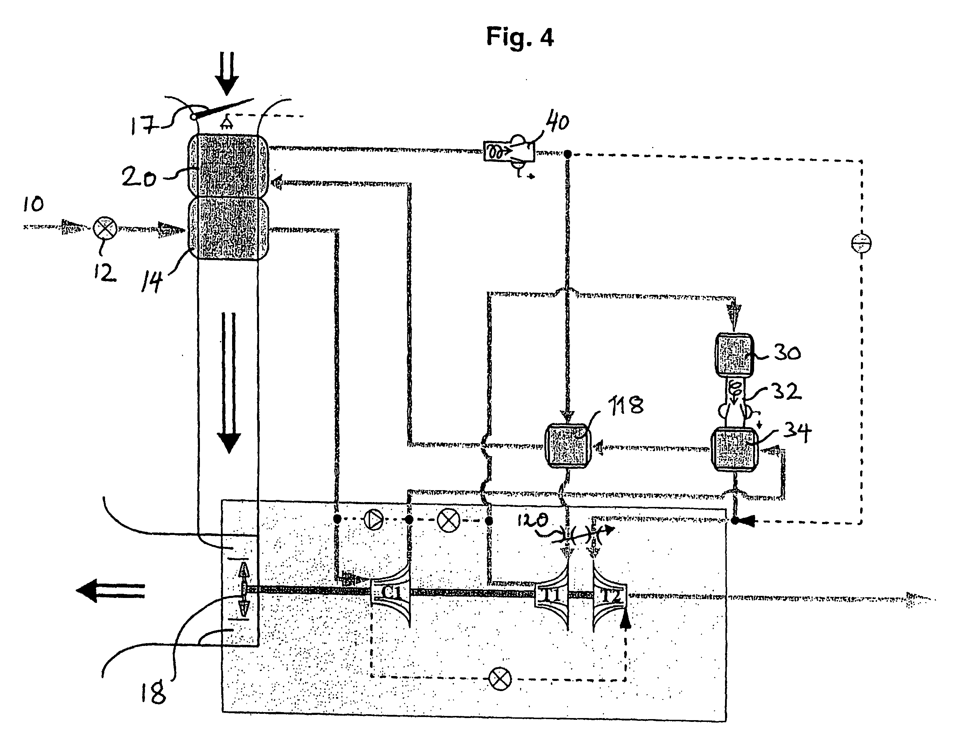

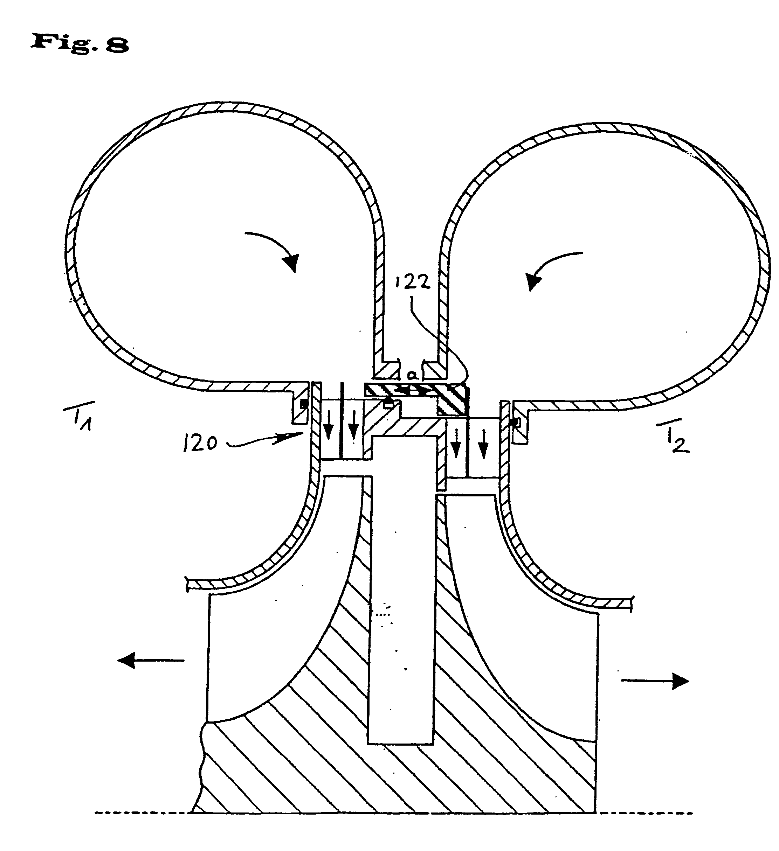

Die in Figur 4 dargestellte Ausführungsvariante zeigt eine 4-Rad-Maschine, bei der auf einer Welle neben dem Ventilator 18 und einem Verdichter C1 die Entspannungsturbinen T1 und T2 unmittelbar nebeneinander angeordnet sind. Die aus dem Wärmetauscher 20 stammende Luft wird über einen Wasserabscheider 40 geführt und anschließend in einen Wärmetauscher 118. Von dort aus strömt die Luft in den Eingang der Entspannungsturbine T1. Vom Ausgang der Entspannungsturbine T1 wird sie, wie beispielsweise auch in den anhand der Figuren 1 bis 3 diskutierten Ausführungsbeispielen in die Tropfenkoalesziervorrichtung 30 und anschließend in den Wasserabscheider 32 geleitet. Die aus dem Wasserabscheider 32 austretende Luft wird wiederum in den Wärmetauscher 34 geleitet, wo sie um wenige Kelvin erwärmt wird, so daß das freie Wasser in die Gasphase übergeht. Die somit vollständig vom freien Wasser befreite Luft wird vom Wärmetauscher 34 auf die zweite Entspannungsturbine geleitet. Die beiden Entspannungsturbinen sind im hier dargestellten Ausführungsbeispiel derart miteinander gekoppelt, daß sie einen gekoppelten, einstellbaren Düsenquerschnitt 120 aufweisen, wie er anhand der Figur 8 näher dargestellt ist. Bei diesem Düsenquerschnitt wird über einen in Doppelpfeilrichtung a verschiebbaren Schieber 122 der Entspannungsgrad der beiden Entspannungsturbinen T1 bzw. T2 eingestellt. Hierdurch kann eine energieoptimierte Regelung der Feuchte durch Verschiebung des Entspannungsgrades der beiden Entspannungsturbinen untereinander erfolgen. Aufgrund dieser Anordnung läßt sich diese Ausführungsvariante sehr kompakt bauen.

Falls dies gewünscht wird, kann die Kopplung der Einstellung des Entspannungsgrades der beiden Entspannungsturbinen T1 und T2 aber auch bei Ausführungsvarianten mit zwei separaten Wellen verwirklicht werden, so beispielsweise bei einer 2+2-Rad-Maschine bzw. einer 2+3-Rad-Maschine, bei denen die Entspannungsturbinen T1 und T2 jeweils auf unterschiedlichen Wellen gelagert sind.

## Patentansprüche

1. Klimatisierungssystem für Flugzeuge zum Aufbereiten von Feuchtigkeit enthaltender, unter Überdruck stehender Luft zur Klimatisierung einer Flugzeugkabine mit:
- mindestens einem Verdichter (C1) zum Verdichten der bereits unter Überdruck zugeführten Luft auf einen noch höheren Druck,
- einer ersten Entspannungsturbine (T1) zum Entspannen der Luft auf einen niedrigeren Druck,
- einer zweiten dieser ersten nachgeschalteten Entspannungsturbine (T2) zum weiteren Entspannen der Luft,
- und einer zwischen der ersten Entspannungsturbine (T1) und der zweiten Entspannungsturbine (T2) angeordneten Wasserabscheideeinrichtung (32),
- **dadurch gekennzeichnet, dass** der Entspannungsgrad der Luft zu deren Feuchtigkeitsregelung in der ersten Entspannungsturbine (T1) gezielt einstellbar ist.

2. Klimatisierungssystem nach Anspruch 1, **dadurch gekennzeichnet, daß** die erste Entspannungsturbine (T1) einstellbare Düsenquerschnitte (80) aufweist.

3. Klimatisierungssystem nach Anspruch 2, **dadurch gekennzeichnet, daß** der Düsenquerschnitt (80) über einen Schieber (90) veränderbar ist.

4. Klimatisierungssystem nach Anspruch 1 oder 2, **dadurch gekennzeichnet, daß** die erste Entspannungsturbine (T1) eine Zweifachdüse (84, 86) aufweist, die mit separaten Luftzuleitungen verbunden ist, wobei eine der Zuleitungen absperrbar ist.

5. Klimatisierungssystem nach einem der Ansprüche 1 bis 4, **dadurch gekennzeichnet, daß** die erste Entspannungsturbine (T1) einen Bypass (102) aufweist, über den zumindest ein Teilstrom der Luft an der Entspannungsturbine vorbeiführbar ist.

6. Klimatisierungssystem nach Anspruch 5, **dadurch gekennzeichnet, daß** der Bypass (102) über einen Schieber (90) zu- oder aufsteuerbar ist .

7. Klimatisierungssystem nach einem der Ansprüche 1 bis 6, **dadurch gekennzeichnet, daß** über ein Regelventil (100) regelbar ein Teil des Luftstroms unmittelbar vom Einlaß oder Auslaß eines zweiten Verdichters (C2) hinter der ersten Entspannungsturbine (T1) einspeisbar ist.

8. Klimatisierungssystem nach einem der Ansprüche 1 bis 7, **dadurch gekennzeichnet, daß** vor einem Primärwärmetauscher eine Befeuchtungseinrichtung für die vom Triebwerk abgezapfte Luft angeordnet ist.

9. Klimatisierungssystem nach einem der Ansprüche 1 bis 8, **dadurch gekennzeichnet, daß** zusätzlich zu dem Entspannungsgrad der Luft in der ersten Entspannungsturbine (T1) auch der Entspannungsgrad der Luft in der zweiten Entspannungsturbine (T2) gezielt einstellbar ist.

10. Klimatisierungssystem nach Anspruch 9, **dadurch gekennzeichnet, daß** die zweite Entspannungsturbine (T2) einstellbare Düsenquerschnitte (80) aufweist.

11. Klimatisierungssystem nach Anspruch 10, **dadurch gekennzeichnet, daß** der Düsenquerschnitt (80) über einen Schieber (90) veränderbar ist.

12. Klimatisierungssystem nach Anspruch 9 oder 10, **dadurch gekennzeichnet, daß** die zweite Entspannungsturbine (T2) eine Zweifachdüse (84, 86) aufweist, die mit separaten Luftzuleitungen verbunden ist, wobei eine der Zuleitungen absperrbar ist.

13. Klimatisierungssystem nach einem der Ansprüche 9 bis 12, **dadurch gekennzeichnet, daß** die zweite Entspannungsturbine (T2) einen Bypass (102) aufweist, über den zumindest ein Teilstrom der Luft an der Entspannungsturbine vorbeiführbar ist.

14. Klimatisierungssystem nach Anspruch 13, **dadurch gekennzeichnet, daß** der Bypass (102) über einen Schieber (90) zu- oder aufsteuerbar ist.

15. Klimatisierungssystem nach einem der Ansprüche 9 bis 14, **dadurch gekennzeichnet, daß** über ein Regelventil regelbar ein Teil des Luftstroms unmittelbar vom Einlaß oder Auslaß eines Verdichters (C1) hinter der zweiten Entspannungsturbine (T2) einspeisbar ist.

16. Klimatisierungssystem nach einem der vorangehenden Ansprüche, **dadurch gekennzeichnet, daß** die erste und zweite Entspannungsturbine (T1, T2) jeweils auf einer gemeinsamen Welle angeordnet sind.

17. Klimatisierungssystem nach Anspruch 16, **dadurch gekennzeichnet, daß** die Düsenquerschnitte (80) der ersten und zweiten Entspannungsturbine (T1, T2) gekoppelt einstellbar sind.

18. Klimatisierungssystem nach mindestens einem der vorangehenden Ansprüche, **dadurch gekennzeichnet, daß** die erste und zweite Entspannungsturbine (T1, T2) auf separaten Wellen angeordnet sind.

19. Klimatisierungssystem nach Anspruch 18, **dadurch gekennzeichnet, daß** die Düsenquerschnitte (80) der ersten und zweiten Entspannungsturbine (T1, T2) in Abhängigkeit von einander getrennt einstellbar sind.

## Claims

1. An air-conditioning system for airplanes for the preparation of air containing moisture and having overpressure for the air-conditioning of an airplane cabin comprising:
- at least one compressor (C1) for the compression of the air already supplied at overpressure to an even higher pressure;
- a first expansion turbine (T1) for the expansion of the air to a lower pressure;
- a second expansion turbine (T2) downstream of said first expansion turbine for the further expansion of the air;
- and a water separation device (32) arranged between said first expansion turbine (T1) and said second expansion turbine (T2),
**characterized in that** the degree of expansion of the air can be adjusted directly in the first expansion turbine (T1) for the control of the moisture of said air.

2. An air-conditioning system in accordance with claim 1, wherein the first expansion turbine (T1) has adjustable nozzle cross-sections (80).

3. An air-conditioning system in accordance with claim 2, wherein the nozzle cross-section (80) can be changed via a slider (90).

4. An air-conditioning system in accordance with either of claims 1 or 2, wherein the first expansion turbine (T1) has a double nozzle (84, 86) which is connected to separate air feed lines, with one of the feed lines being closable.

5. An air-conditioning system in accordance with any of claims 1 to 4, wherein the first expansion turbine (T1) has a bypass (102) via which at least a partial flow of the air can be led past the expansion turbine.

6. An air-conditioning system in accordance with claim 5, wherein the bypass (102) can be controlled to close or open via a slider (90).

7. An air-conditioning system in accordance with any of claims 1 to 6, wherein some of the air flow can be fed in directly from the inlet or outlet of a second compressor (C2) behind the first expansion turbine (T1) in a controllable manner via a control valve (100).

8. An air-conditioning system in accordance with any of claims 1 to 7, wherein a moistening device for the air tapped from the engine is arranged before a primary heat exchanger.

9. An air-conditioning system in accordance with any of claims 1 to 8, wherein, in addition to the degree of expansion of the air in the first expansion turbine (T1), the degree of expansion of the air in the second expansion turbine (T2) can also be adjusted directly.

10. An air-conditioning system in accordance with claim 9, wherein the second expansion turbine (T2) has adjustable nozzle cross-sections (80).

11. An air-conditioning system in accordance with claim 10, wherein the nozzle cross-section (80) can be changed via a slider (90).

12. An air-conditioning system in accordance with either of claims 9 or 10, wherein the second expansion turbine (T2) has a double nozzle (84, 86) which is connected to separate air feed lines, with one of the feed lines being closable.

13. An air-conditioning system in accordance with any of claims 9 to 12, wherein the second expansion turbine (T2) has a bypass (102) via which at least a partial flow of the air can be led past the expansion turbine.

14. An air-conditioning system in accordance with claim 13, wherein the bypass (102) can be controlled to close or open via a slider (90).

15. An air-conditioning system in accordance with any of claims 9 to 14, wherein some of the air flow can be fed in directly from the inlet or outlet of a compressor (C1) behind the second expansion turbine (T2) in a controllable manner via a control valve.

16. An air-conditioning system in accordance with any of the preceding claims, wherein the first and second expansion turbines (T1, T2) are each arranged on a common shaft.

17. An air-conditioning system in accordance with claim 16, wherein the nozzle cross-sections (80) of the first and second expansion turbines (T1, T2) can be adjusted in a coupled manner.

18. An air-conditioning system in accordance with at least one of the preceding claims, wherein the first and second expansion turbines (T1, T2) are arranged on separate shafts.

19. An air-conditioning system in accordance with claim 18, wherein the nozzle cross-sections (80) of the first and second expansion turbines (T1, T2) can be adjusted separately in dependence on one another.

## Revendications

1. Système de conditionnement d'air pour des avions pour la préparation de l'air contenant de l'humidité, sous surpression, pour la climatisation d'une cabine d'avion comprenant:
- au moins un compresseur (C1) pour la compression de l'air déjà amené sous surpression à une pression encore plus élevée,
- une première turbine de détente (T1) pour détendre l'air à une pression plus basse,
- une deuxième turbine de détente (T2) disposée en aval de la première pour continuer à détendre l'air,
- et une installation de séparation d'eau (32) disposée entre la première turbine de détente (T1) et la deuxième turbine de détente (T2), **caractérisé en ce que** le degré de détente de l'air, dans le but du réglage de l'humidité de celui-ci, peut être réglé d'une manière ciblée dans la première turbine de détente (T1).

2. Système de conditionnement d'air selon la revendication 1, **caractérisé en ce que** la première turbine de détente (T1) présente des sections transversales de buse (80) réglables.

3. Système de conditionnement d'air selon la revendication 2, **caractérisé en ce que** la section transversale de buse (80) est modifiable par un tiroir (90).

4. Système de conditionnement d'air selon la revendication 1 ou 2, **caractérisé en ce que** la première turbine de détente (T1) présente une buse double (84, 86) qui est reliée à des conduits d'amenée d'air séparés, où l'un des conduits d'amenée peut être fermé.

5. Système de conditionnement d'air selon l'une des revendications 1 à 4, **caractérisé en ce que** la première turbine de détente (T1) présente une dérivation (102) par laquelle au moins un flux partiel de l'air peut être guidé en passant devant la turbine de détente.

6. Système de conditionnement d'air selon la revendication 5, **caractérisé en ce que** la dérivation (102) peut être commandée à l'état passant ou à l'état non-passant par un tiroir (90).

7. Système de conditionnement d'air selon l'une des revendications 1 à 6, **caractérisé en ce que** par une vanne de réglage (100), une partie du flux d'air peut être introduite d'une manière réglable directement de l'entrée ou de la sortie d'un deuxième compresseur (C2) derrière la première turbine de détente (T1).

8. Système de conditionnement d'air selon l'une des revendications 1 à 7, **caractérisé en ce qu'**une installation d'humidification de l'air soutiré du motopropulseur est disposé en amont d'un échangeur de chaleur primaire.

9. Système de conditionnement d'air selon l'une des revendications 1 à 8, **caractérisé en ce qu'**en plus du degré de détente de l'air dans la première turbine de détente (T1), également le degré de détente de l'air dans la deuxième turbine de détente (T2) peut être réglé d'une manière ciblée.

10. Système de conditionnement d'air selon la revendication 9, **caractérisé en ce que** la deuxième turbine de détente (T2) présente des sections transversales de buse (80) réglables.

11. Système de conditionnement d'air selon la revendication 10, **caractérisé en ce que** la section transversale de buse (80) est modifiable par un tiroir (90).

12. Système de conditionnement d'air selon la revendication 9 ou 10, **caractérisé en ce que** la deuxième turbine de détente (T2) présente une buse double (84, 86) qui est reliée à des conduits d'admission d'air séparés, où l'un des conduits d'admission peut être fermé.

13. Système de conditionnement d'air selon l'une des revendications 9 à 12, **caractérisé en ce que** la deuxième turbine de détente (T2) présente une dérivation (102) par laquelle au moins un flux partiel de l'air peut être amené à passer devant la turbine de détente.

14. Système de conditionnement d'air selon la revendication 13, **caractérisé en ce que** la dérivation (102) peut être commandée à l'état passant ou non-passant par un tiroir (90).

15. Système de conditionnement d'air selon l'une des revendications 9 à 14, **caractérisé en ce que** par une vanne de réglage, une partie du flux d'air peut être introduite d'une manière réglée directement de l'entrée ou de la sortie d'un compresseur (C1) derrière la deuxième turbine de détente (T2).

16. Système de conditionnement d'air selon l'une des revendications précédentes, **caractérisé en ce que** la première et deuxième turbine de détente (T1, T2) sont disposées à chaque fois sur un arbre commun.

17. Système de conditionnement d'air selon la revendication 16, **caractérisé en ce que** les sections transversales de buse (80) de la première et deuxième turbine de détente (T1, T2) sont réglables d'une manière couplée.

18. Système de conditionnement d'air selon au moins l'une des revendications précédentes, **caractérisé en ce que** la première et deuxième turbine de détente (T1, T2) sont disposées sur des arbres séparés.

19. Système de conditionnement d'air selon la revendication 18, **caractérisé en ce que** les sections transversales de buse (80) de la première et deuxième turbine de détente (T1, T2) sont réglables séparément l'une en fonction de l'autre.
